# EUROPÄISCHE PATENTSCHRIFT

(11) **EP 1 319 960 B1**
(45) Veröffentlichungstag und Bekanntmachung des Hinweises auf die Patenterteilung: **11.01.2006**
(21) Anmeldenummer: 02024617.9
(22) Anmeldetag: 04.11.2002
(51) Int. Cl.: G01S 7/292

(54) **Verfahren zur CFAR-Verarbeitung von Radarsignalen**
CFAR method for radar signals
Méthode pour traiter des signaux radar de type CFAR

(30) Priorität: 12.12.2001 DE 10160896
(43) Veröffentlichungstag der Anmeldung: 18.06.2003
(73) Patentinhaber: EADS Deutschland GmbH, 85521 Ottobrunn (DE)
(72) Erfinder: Gessler, Ralf, Dr., 88255 Baienfurt (DE); Rössler, Martin, 89077 - Ulm (DE); Kölle, Hans-Georg, 89188 Merklingen (DE)
(74) Vertreter: Meel, Thomas

(56) Entgegenhaltungen:
- EP-A- 0 784 212
- DE-A- 3 213 430
- DE-A- 10 009 383
- US-A- 4 386 353
- US-A- 4 713 664

## Beschreibung

Die Erfindung betrifft ein Verfahren zur CFAR-Verarbeitung von Radarsignalen.

Die Aufgabe eines Radarempfängers besteht darin, ein empfangenes Signal auszuwerten und in dem Signalverlauf Signalanteile von Echtzielen gegen Hintergrundsignale und Falschziele zu unterscheiden und als Zielmeldung auszugeben. Der Sender strahlt typischerweise hochfrequente Pulse über eine Antenne in einen schmalen Azimut-Winkelbereich aus, welche sowohl an Echtzielen als auch an Störzielen reflektiert werden. Der Echo-Signalverlauf innerhalb eines Sende-Empfangs-Zyklus zu einem Sendepuls wird in Entfernungsinkremente aufgelöst und vorzugsweise digital weiterverarbeitet. Die Erkennung eines Ziels erfolgt typischerweise durch Vergleich der Signalamplitude innerhalb eines Entfernungsschritts mit einem Schwellwert. Das Antennendiagramm schwenkt für einen neuen Sende-Empfangs-Zyklus in eine neue Azimut-Richtung. Die Azimut-Schwenkschritte und die Entfernungsschritte innerhalb eines Zyklus bestimmen eine Unterteilung des Überwachungsraums in Auflösungszellen eines Azimut-Entfernungs-Rasters.

Um einerseits Falschzielmeldungen durch Störziele, sogenannten Clutter weitgehend zu vermeiden und andererseits auch Echtziele aus einem Störhintergrund heraus zu erkennen, haben sich insbesondere Signalverbeitungsverfahren zur Erzielung einer konstanten Falschalarmrate, sogenannte CFAR (Constant False Alarm Rate) bewährt, deren wesentliche Eigenschaft die adaptive Nachführung eines Schwellwerts aus den Signalwerten von Auflösungszellen aus der Umgebung einer aktuell betrachteten Auflösungszelle, der Zelle unter Test oder Testzelle, ist.

Ein solches CFAR-Verfahren ist beispielsweise aus der DE 32 13 430 C2 bekannt. Das bekannte Verfahren beruht auf der Verwendung so genannter geordneter Statistiken (ordered statistics, OS) und bildet aus den Signalamplituden mehrerer ausgewählter Auflösungszellen aus der Umgebung einer Zelle unter Test eine nach Amplituden sortierte Rangfolge, aus welcher ein an einem vorgebbaren Rang einsortierter Signalwert als Schätzwert für die Störumgebung der Zelle unter Test entnommen wird und durch Gewichtung mit einem konstanten Faktor zu einem Schwellwert für die Zelle unter Test führt. Der vorgebbare Rang liegt vorzugsweise ungefähr in der Mitte der Rangfolge. Die Rangfolgensortierung ist aufwendig und erfordert erheblichen Speicherbedarf. Bei dem bekannten Verfahren werden daher vorzugsweise nur die Signalwerte aus in Entfernungsrichtung benachbarten Auflösungszellen zur Ableitung des Schwellwerts herangezogen.

Aus der DE 100 09 383 A1 ist eine Vorrichtung und ein Verfahren zur schaltungstechnischen Realisierung eines für eine solche Rangfolge-Sortierung besonders geeigneten Rank-Value-Filters beschrieben, welches nach einem Prinzip des Löschens und Einfügens den Inhalt eines Schieberegisters in jedem neuen Taktschritt auf vorteilhafte Weise sortiert.

Aus US 4,386,353 ist ein Verfahren zur Verarbeitung von Radarsignalen aus einem durch ein Entfernungs-Azimut-Raster in Auflösungszellen unterteilten Überwachungsraum, welches aus den Signalwerten mehrerer Auflösungszellen aus der Umgebung einer Zelle unter Test einen Schwellwert für den Signalwert der Zelle unter Test ableitet, bekannt.

Der vorliegenden Erfindung liegt die Aufgabe zugrunde, ein CFAR-Verfahren zur Radarsignalverarbeitung anzugeben, welches auf vorteilhafte Weise eine Erweiterung der Basis zur Ableitung eines Schwellwerts und damit eine prinzipielle bessere Adaption an eine auch inhomogene Störumgebung ermöglicht.

Diese Aufgabe wird durch das Verfahren gemäß Anspruch 1 gelöst. Die abhängigen Ansprüche enthalten vorteilhafte Ausgestaltungen und Weiterbildungen.

Das erfindungsgemäße Verfahren bezieht Auflösungszellen aus einem zweidimensionalen Umgebungsgebiet um eine Zelle unter Test ein, reduziert dabei aber die Verarbeitung der Signalwerte aus ausgewählten Zellen auf besonders vorteilhafte Weise auf eindimensionale Verarbeitung von Wertereihen kurzer Länge mit geringem Aktualisierungsumfang. Insbesondere der Einsatz eines Rank-Value-Filters, wie aus der genannten DE 100 09 383 A1 bekannt, ermöglicht mit vertretbarem Aufwand eine fortlaufende Echtzeit-Verarbeitung der Echosignale. Die Zelle unter Test ist vorzugsweise in die jeweiligen Umgebungsbereiche mit eingeschlossen und im folgenden gleichfalls als Umgebungszelle behandelt, was insbesondere vorteilhaft bei der Anwendung des Rank-Value-Filters ist.

Erfindungsgemäß werden Signalwerte von Umgebungszellen in Entfernungsrichtung zu einer Zelle unter Test (vorzugsweise unter Einschluss des Signalwerts der Zelle unter Test) zu einer Rangfolge sortiert. Aus dieser Rangfolge werden nunmehr Signalwerte an vorgegebenen Rängen ausgewählt für die weitere Verarbeitung. Die ausgewählten Signalwerte aus Rangfolgen zur mehreren bei gleicher Entfernung in Azimutrichtung benachbarten Entfernungsfenstern werden rangweise gemeinsam einer weiteren statistischen Verarbeitung zugeführt. Diese weiteren statistischen Verarbeitungen sind vorzugsweise wiederum Rangfolge-Sortierungen. Aus den weiteren, rangweise durchgeführten statistischen Verarbeitungen wird rangweise wenigstens ein Schätzwert gewonnen und die so gewonnenen Schätzwerte werden zur Ableitung eines Schwellwerts verknüpft, vorzugsweise durch gewichtete Zusammenfassung oder durch eine erneute Rangfolgesortierung. Die weiteren rangweise durchgeführten statistischen Verarbeitungen können alternativ auch eine gewichtete Mittelwertbildung oder andere an sich bekannte Vorgehensweisen beinhalten.

Das erfindungsgemäße Verfahren kann mit anderen Störunterdrückungsmaßnahmen wie z.B. einer Dopplerverarbeitung der Echosignale kombiniert werden.

Die Erfindung ist nachfolgend anhand bevorzugter Ausführungsbeispiele unter Bezugnahme auf die Abbildungen noch eingehend veranschaulicht. Dabei zeigt:
- Fig. 1: ein Schema eines Überwachungsraums
- Fig. 2: ein Überwachungsgebiet mit verschiedenen Zusammenstellungen von Umgebungszellen gemäß einer bekannten Variante
- Fig. 3: eine prinzipielle Verarbeitungs-Architektur zu gemäß einer bekannten Variante
- Fig. 4: ein Überwachungsgebiet mit einem Umgebungsgebiet gemäß der Erfindung
- Fig. 5: eine prinzipielle Verarbeitungs-Architektur gemäß der Erfindung
- Fig. 6: eine kombinierte Verarbeitungs-Architektur

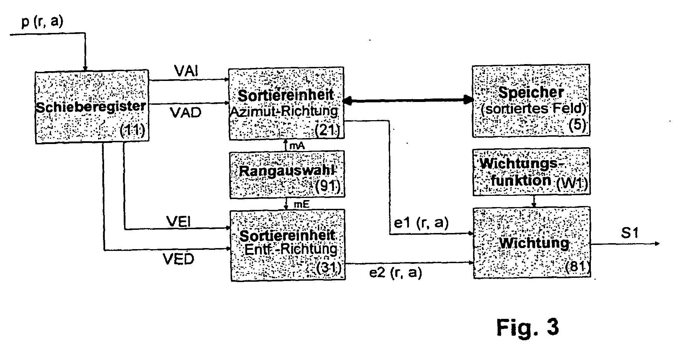

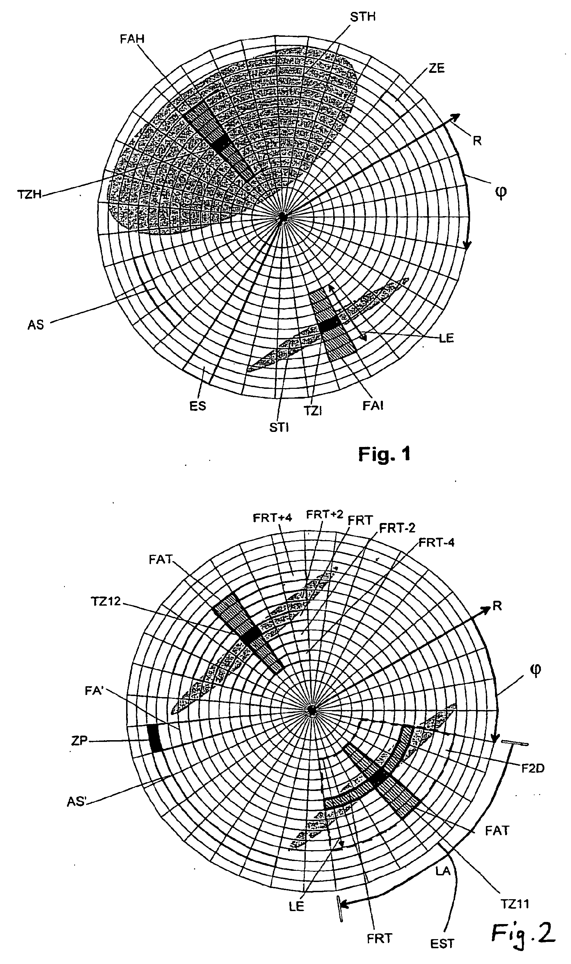

In Fig. 1 ist schematisch ein Überwachungsgebiet einer Radaranlage mit 360° Überdeckung skizziert, welches durch eine Mehrzahl von in Azimutrichtung ϕ aufeinander folgenden Winkelsegmenten und in Entfernungsrichtung R aufeinander folgenden Ringen in ein Raster mit einer Vielzahl von Auflösungszellen ZE unterteilt ist. Eine Reihe von bei gleichem Azimut in Entfernungsrichtung R aufeinander folgenden Auflösungszellen sei als Entfernungsspeiche ES, eine Reihe von bei gleicher Entfernung im Azimut aufeinander folgenden Auflösungszellen als Entfernungsringsegment AS bezeichnet. Die Zellenauflösung ist im Realfall wesentlich feiner als in Fig. 1 skizziert. Gebräuchlich ist die Zusammenfassung mehrerer Auflösungszellen in einem Entfernungsfenster FA bei gleichem Azimut zur Ableitung eines Schwellwerts für die Zieldetektion. Während bei einem ausgedehnten homogenen Störgebiet STH (links oben in Fig. 1) die in dem Umgebungsfenster FAH erfassten Signalwerte aus der Umgebung der Zelle unter Test TZH den Störhintergrund durch das Störgebiet STH gut repräsentieren, ist dies bei den durch das Umgebungsfenster FAI zu der Testzelle TZI im Störgebiet STI (rechts unten in Fig. 1) erfassten Umgebungszellen offensichtlich nicht der Fall. In der Zelle TZI ist daher bei Verwendung des Fensters FAI eine Falschzielmeldung zu erwarten.

Es ist bekannt z.B. aus US 4,386,353, dass, wie in Fig. 2 skizziert, zu einer Zelle unter Test TZ11 bzw. TZ12 nicht nur Signalwerte von in Entfernungsrichtung bei gleichem Azimut benachbarten Auflösungszellen für die Ableitung eines Schwellwerts für den Signalwert der Zelle unter Test betrachtet werden, sondern es werden auch Signalwerte von Zellen, welche in zu der Zelle unter Test benachbarten Entfernungsspeichen liegen, für die Ableitung des Schwellwerts herangezogen. Das gesamt betrachtete Umgebungsgebiet zeigt in azimutaler Richtung eine Ausdehnung über eine Anzahl LA Entfernungsspeichen und in Entfernungsrichtung eine Ausdehnung über eine Anzahl LE Entfernungsringe. Für die Auswertung werden die für die Ableitung des Schwellwerts betrachteten Auflösungszellen zu einer ersten Gruppe entsprechend einem Entfernungsfenster FAT der Länge LE um die Zelle unter Test mit einheitlichem Azimut und zu einer oder mehreren weiteren Gruppen entsprechend azimutalen Ringsegmenten der Länge um die die Testzelle enthaltende Entfernungsspeiche EST zusammengefasst. Vorzugsweise enthält wenigstens eines der Ringsegmente die Testzelle selbst. Im einfachsten Fall ist nur ein Ringsegment FRT als azimutale Umgebung betrachtet wie in Fig. 2 rechts unten für die Testzelle TZ11 skizziert. Für eine vollständige Erfassung eines zweidimensionalen, mit unterbrochener Linie eingezeichneten Umgebungsfensters F2D wäre demgemäß eine Anzahl LE von azimutalen Ringsegmenten zu bearbeiten. Eine Zwischenlösung mit einer ausgedünnten Gebietsabdeckung mit Entfernungsringsegmenten FRT+4, FRT+2, FRT, FRT-2, FRT-4 ist in Fig. 2 oben skizziert, wo nur jedes zweite Ringsegment ausgewertet wird. Andere Aufteilungen sind vorstellbar und je nach zu erwartenden Cluttergebiettypen vorgebbar.

Aus Fig. 2 ist ersichtlich, dass von einem zweidimensionalen Umgebungsfenster oder Teilen desselben mit azimutaler Ausdehnung über mehrere benachbarte Entfernungsspeichen ein größerer Anteil des Störgebiets STI erfasst wird und somit eine verlässlichere Beurteilung des Störhintergrunds und eine Verringerung der Falschalarmrate bzw. Erhöhung der Zielentdeckungswahrscheinlichkeit im Clutter erwartet werden kann.

Aus der Gruppe der Signalwerte aus den ausgewählten Umgebungszellen in dem Entfernungsfenster FAT wird durch statistische Verarbeitung, vorzugsweise einer OS-CFAR, wenigstens ein erster Schätzwert gewonnen. Aus jeder Gruppe der ausgewählten Entfernungsringsegmente wird durch statistische Verarbeitung jeweils wenigstens ein weiterer Schätzwert gewonnen. Die gewonnenen Schätzwerte werden zur Ableitung eines Schwellwerts für die Zelle unter Test miteinander verknüpft, vorzugsweise durch gewichtete Zusammenfassung.

Die Aufteilung eines zweidimensionalen Umgebungsfensters in eindimensionale Entfernungs- bzw. Azimutfenster (Segmente) führt bei der statistischen Auswertung der Signalwerte zu einer erheblichen Vereinfachung, was insbesondere bei Anwendung der OS-CFAR auf die einzelnen Fenster den Verarbeitungsaufwand im Vergleich zu einer gemeinsamen statistischen Auswertung derselben Signalwerte in einer Stufe erheblich reduziert. In Fig. 2 ist dies für einen neuen Signalwert einer Signalprobe zu einer Probenzelle ZP veranschaulicht. Die neue Signalprobe erfordert lediglich die Aktualisierung von zwei statistischen Verarbeitungen nämlich zu einem einen Entfernungstakt zurückliegenden Entfernungsfenster FA' und zu einem einen Azimutschrift zurückliegenden Segment AS'. Bei Abdeckung des zweidimensionalen Umgebungsfensters F2D zu einer Testzelle durch mehrere Segmente wie z.B. im in der Fig. 2 oben skizzierten Beispiel wird ein und dasselbe Segment bzw. der daraus gewonnene weitere Schätzwert für mehrere in unterschiedlichen Entfernungsen derselben Entfernungsspeiche liegende Zellen unter Test zur Auswertung herangezogen, so dass der daraus gewonnene Schätzwert mit ggf. wechselnder Gewichtung zur Ableitung der Schwellwerte für mehrere verschiedene Testzellen Verwendung finden kann.

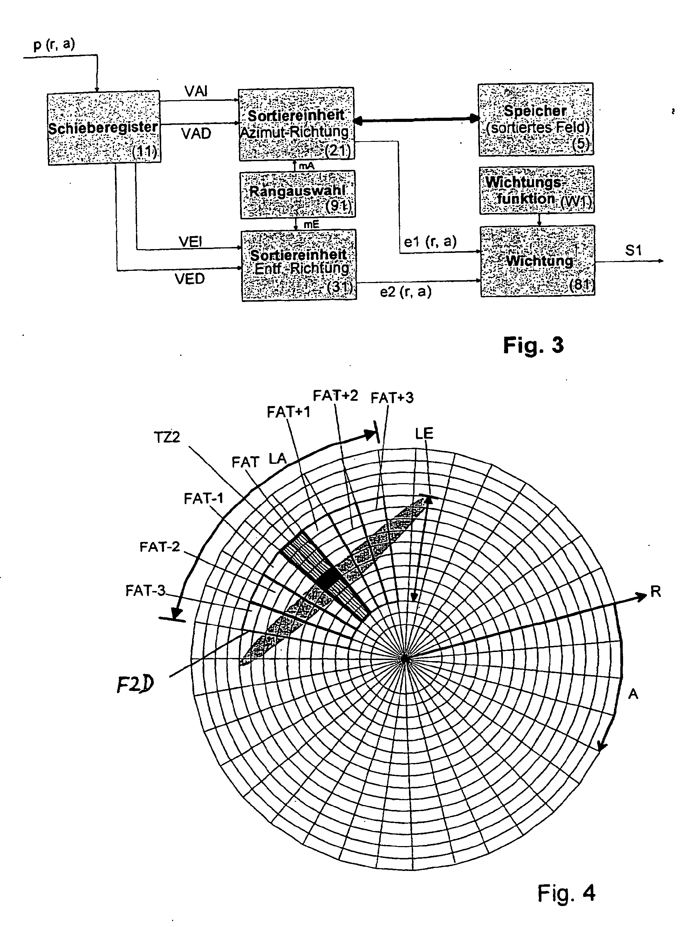

In Fig. 3 ist ein bekannter prinzipieller Aufbau einer Signalverarbeitungs-Architektur für die getrennte statistische Auswertung von Umgebungszellen in einem Entfernungsfenster einerseits und in azimutalen Ringsegmenten andererseits skizziert. Die in aufeinander folgenden Entfernungsinkrementen anfallender Signalwerte werden als Proben P(R,A) nacheinander in ein Schieberegister 1 eingespeist, welches vorteilhafterweise Signalproben im Umfang von LA Sende-Empfangs-Zyklen fasst. Mit jeder neuen Probe P(R,A) wird
a) der als aktuelle Probe zugeführte Signalwert P(r,a) als Einfügewert VAI und ein zum selben Entfernungsring r um LA Azimutschritte zurückliegender Signalwert P(r,a-LA) als Löschwert VAD einer Azimut-Sortiereinheit 2 zugeführt, welche zugleich die zuletzt zu diesem Entfernungswert gespeicherte sortierte Rangfolge aus einem Azimut-Rangfolgenspeicher 5 übernimmt und anhand der zugeführten Werte aktualisiert und in Speicher 5 ablegt
b) der als aktuelle Probe zugeführte Signalwert P(r,a) als Einfügewert VEI und ein zum selben Azimutwert um LE Entfernungsschritte zurückliegender Signalwert P(r-LE, a) als Löschwert VED einer Entfernungs-Sortiereinheit 31 zugeführt, welche ihre vorherige sortierte Rangfolge anhand der zugeführten Werte aktualisiert
c) aus der aktualisierten Rangfolge RE der Entfernungs-Sortiereinrichtung 31 von Rang mE ein erster Schätzwert e1 (r,a) an eine Wichtungsstufe 81 gegeben.
d) aus der aktualisierten Rangfolge RA der Azimut-Sortiereinrichtung 21 von Rang mA ein weiterer Schätzwert e2 (r,a) an die Wichtungsstufe 81 gegeben
e) in der Wichtungsstufe 81 unter Berücksichtigung neuer und aus zurückliegenden Takten gespeicherter Schätzwerte ein Schwellwert s1 für eine Zelle unter Test, welche im Regelfall gegenüber der Probenzelle in Entfernung und Azimut zurück liegt, erzeugt.

Die Auswahl von Schätzwerten e1 (r,a) und e2 (r,a) aus den sortierten Rangfolgen in der Entfernungs-Sortiereinheit 31 bzw. der Azimut-Sortiereinheit 2 kann mittels einer Rangauswahl-Einrichtung 91 erfolgen, in welcher auszuwählende Ränge mE bzw. mA vorgegeben, vorzugsweise einstellbar vorgegeben sind. Der Wichtungsstufe 81 ist eine Wichtungsvorschrift w1 zugeordnet, in welcher vorzugsweise veränderlich vorgebbar festgelegt ist, welche Schätzwerte mit welchem Gewicht bei der Ableitung des Schwellwerts s1 zu berücksichtigen sind.

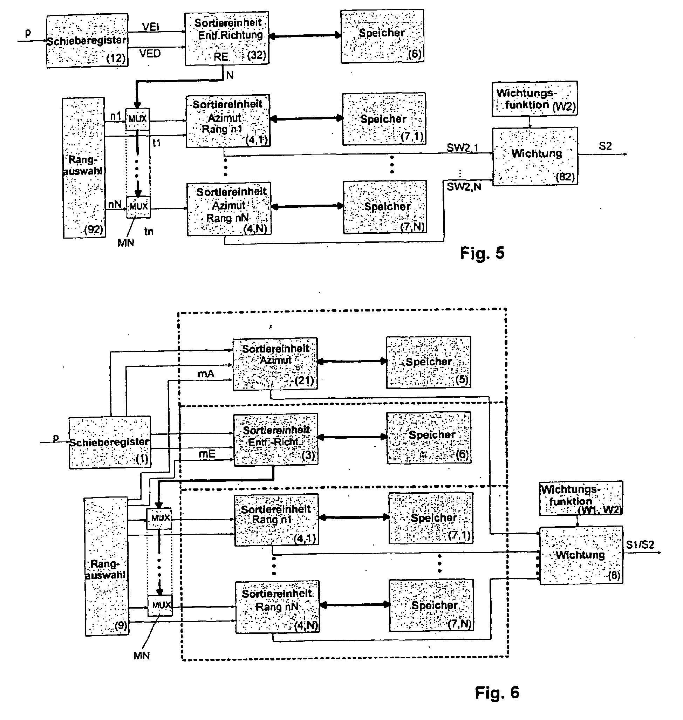

Das erfindungsgemäße Verfahren sieht vor, dass, wie in Fig. 5 skizziert, ein zweidimensionales Umgebungsfenster F2D zu einer Zelle unter Test TZ2, welches sich in Entfernungsrichtung über LE Entfernungsschritte und in Azimutrichtung über LA Azimutschritte erstreckt, aufgeteilt ist in eine Anzahl LA Entfernungsfenster der Entfernungslänge LE. Die Zelle unter Test liegt vorzugsweise sowohl in Entfernungsrichtung als auch in Azimutrichtung wenigstens annähernd in der Mitte des zweidimensionalen Umgebungsfensters. Die in dem zweidimensionalen Umgebungsfenster enthaltenen Entfernungsfenster sind mit FAT-3, FAT-2, FAT-1, FAT, FAT+1, FAT+2, FAT+3 bezeichnet, wobei das Entfernungsfenster FAT die Zelle unter Test enthält und die anderen Entfernungsfenster vorzugsweise wie im Beispielsfall symmetrisch um FAT gruppiert sind.

Innerhalb jedes Entfernungsfensters werden die Signalwerte der mehreren Auflösungszellen zu einer Rangfolge RE (r,a) sortiert. Aus diesen Rangfolgen werden jeweils N gleiche Ränge ausgewählt und die Signalwerte gleicher Ränge aus.mehreren azimutal verschiedenen Fenstern werden rangweise einer weiteren statistischen Verarbeitung, z.B. einer ggf. gewichteten Mittelwertbildung oder vorzugsweise einer weiteren Rangfolge-Sortierung unterzogen, aus welcher in der Entfernungssortierung je ausgewähltem Rang wenigstens ein Schätzwert gewonnen wird. Die so gewonnenen Schätzwerte werden zur Ableitung eines Schwellwerts zusammengefasst, z.B. durch gewichtete Mittelwertbildung oder auch durch eine zusätzliche Sortierung mit Rangauswahl. Die Anzahl N ausgewählter Ränge kann von N=1 bis N=LE variieren.

In Fig. 5 ist der prinzipielle Aufbau einer Signalverarbeitungsarchitektur für die vorstehend gesschilderte Lösungsvariante skizziert. Ein neuer Signalwert als aktuelle Probe P (r,a) wird wie bei der Architektur nach Fig. 3 in ein Schieberegister 12 eingespeist, dessen Länge hier auf LE beschränkt sein kann. Aus dem Schieberegister 12 wird der neue Signalwert als Einfügewert VEI und der um LE zurückliegende und aus dem Schieberegister ausgeschobene Signalwert als Löschwert VED einer Entfernungs-Sortiereinheit 32 zugeführt, welche die letzte Rangfolge nach dem Prinzip des Einfügens und Löschens aktualisiert und eine neue Rangfolge RE erzeugt. In einem Speicher 6 können Daten zwischengespeichert werden.

Die Signalwerte N aus ausgewählten Rängen (z.B. Minimum, Maximum und Median, N=3) der in der Entfernungs-Sortiereinheit erzeugten Rangfolge RE werden einer Multiplexer-Einrichtung MN zugeführt, welche die Signalwerte rangrichtig jeweils einer von N Azimut-Sortiereinrichtungen 4,1 ... 4,N zugeführt, welche die in Speichern 7,1 ... 7,N zwischengespeicherten zugehörigen älteren azimutalen Rangfolgen anhand der neu zugeführten Signalwerte jeweils gleichen Rangs aktualisieren.

Aus den aktualisierten Rangfolgen in den Azimut-Sortiereinrichtungen 4,1 ... 4,N wird jeweils aus einem vorgebbaren Rang t1, ...tN ein Signalwert als Schätzwert sw2,1 ... sw2,N gewonnen. Die so gewonnenen Schätzwerte sw2,i werden in einer Wichtungsstufe 82 zur Ableitung eines Schwellwerts s2 zusammengefasst, vorzugsweise durch gewichtete Mittelwertbildung nach einer Wichtungsfunktion w2.

Zur Auswahl der jeweiligen Ränge der Entfernungsrangfolge und der Azimut-Rangfolgen ist vorteilhafterweise eine Rangauswahleinrichtung 92 vorgesehen. Die aktualisierten Azimut-Rangfolgen aus den Azimut-Sortiereinrichtungen 4,1 ... 4,N werden wieder in die Zwischenspeicher 7,1 ... 7,N abgelegt.

In Fig. 6 ist eine Variante skizziert, welche die aus dem Stand der Technik bekannte Signalverarbeitungsarchitektur und die erfindungsgemäße Variante berücksichtigt und bei welcher insbesondere die Entfernungs-Sortiereinheit 3, das Schieberegister 1, die Rangauswahl 9 und die Wichtungseinheit 8 gemeinsam für die vorzugsweise umschaltbar wählbaren Verarbeitungsvarianten genutzt werden können.

Die Erfindung ist nicht auf die beschriebenen Ausführungsbeispiele beschränkt, sondern im Rahmen fachmännischen Könnens in mancherlei Weise abwandelbar. Die vorstehend und in den Ansprüchen beschriebenen sowie die den Abbildungen entnehmbaren Merkmale sind sowohl einzeln als auch in verschiedenen Kombinationen vorteilhaft realisierbar.

## Patentansprüche

1. Verfahren zur CFAR-Verarbeitung von Radarsignalen aus einem durch ein Entfernungs-Azimut-Raster in Auflösungszellen unterteilten Überwachungsraum, welches aus den Signalwerten mehrerer Auflösungszellen aus der Umgebung einer Zelle unter Test einen Schwellwert für den Signalwert der Zelle unter Test ableitet, **dadurch gekennzeichnet, dass**
a) Signalwerte von Umgebungszellen in Entfernungsrichtung zu einer Rangfolge sortiert werden,
b) aus der sortierten Signalwertreihe Signalwerte an mehreren vorgegebenen Rängen ausgewählt werden,
c) ausgewählte Signalwerte aus in mehreren verschiedenen Azimutschritten bei gleichen Entfernungsschritten gebildeten Rangfolgen rangweise einer weiteren statistischen Verarbeitung unterzogen werden,
d) aus der weiteren statistischen Verarbeitung rangweise wenigstens ein Schätzwert gewonnen wird,
e) die gewonnenen Schätzwerte zur Ableitung des Schwellwerts verknüpft werden.

2. Verfahren nach Anspruch 1, **dadurch gekennzeichnet, dass** die weitere statistische Verarbeitung eine Sortierung von ausgewählten Signalwerten zu weiteren Rangfolgen beinhaltet.

3. Verfahren nach Anspruch 1 oder 2, **dadurch gekennzeichnet, dass** die weitere statistische Verarbeitung eine Mittelwertbildung von ausgewählten Signalwerten beinhaltet.

## Claims

1. Method for CFAR processing of radar signals from a surveillance area which is subdivided into resolution cells by a range/azimuth raster and derives a threshold value for the signal value of the cell under test from the signal values of a plurality of resolution cells from the area surrounding a cell under test,
**characterized in that**
a) signal values from surrounding cells are sorted into a ranking sequence in the range direction,
b) signal values for a plurality of predetermined rankings are selected from the sorted signal value range,
c) selected signal values from rankings which are formed in a plurality of different azimuth steps for the same range steps are subjected to further statistical processing on the basis of their ranking,
d) at least one estimated value is obtained on the basis of their ranking from the further statistical processing, and
e) the estimated values that are obtained are logically linked in order to derive the threshold value.

2. Method according to Claim 1, **characterized in that** the further statistical processing includes sorting of selected signal values for further rankings.

3. Method according to Claim 1 or 2, **characterized in that** the further statistical processing includes averaging of selected signal values.

## Revendications

1. Procédé pour le traitement TFAC (à taux de fausse alarme constant) de signaux radar provenant d'un espace surveillé divisé en cellules de résolution par un quadrillage distance-azimut, procédé qui, à partir des valeurs de signaux de plusieurs cellules de résolution issues de l'environnement d'une cellule testée, tire une valeur de seuil pour la valeur de signal de la cellule testée, **caractérisé en ce que**
a) les valeurs de signaux de cellules environnantes sont triées selon un ordre hiérarchique dans la direction de distance,
b) dans la série triée de valeurs de signaux, on sélectionne des valeurs de signaux occupant plusieurs rangs prédéfinis,
c) des valeurs de signaux sélectionnées issues d'ordres hiérarchiques formés pour plusieurs pas d'azimut différents pour des pas de distance identiques sont soumises rang par rang à un traitement statistique supplémentaire,
d) à partir du traitement statistique supplémentaire, on obtient pour chaque rang au moins une valeur estimée,
e) les valeurs estimées obtenues sont combinées pour en tirer la valeur de seuil.

2. Procédé selon la revendication 1, **caractérisé en ce que** le traitement statistique supplémentaire comprend un tri des valeurs de signaux sélectionnées selon d'autres ordres hiérarchiques.

3. Procédé selon la revendication 1 ou 2, **caractérisé en ce que** le traitement statistique supplémentaire comprend une formation de la valeur moyenne des valeurs de signaux sélectionnées.
